# EUROPÄISCHE PATENTANMELDUNG

(11) **EP 1 559 502 A2**
(43) Veröffentlichungstag der Anmeldung: **03.08.2005**
(21) Anmeldenummer: 05001908.2
(22) Anmeldetag: 31.01.2005
(51) Int. Cl.: B23Q 1/62, B23Q 1/26, B23Q 3/157, B23Q 7/04, B23Q 39/02

(54) **Werkzeugmaschine mit zwei parallelen und relativ zueinander verfahrbaren Werkzeugspindeln**

(30) Priorität: 31.01.2004 DE 102004004935
(71) Anmelder: Bonneick, Heinz, 38226 Salzgitter (DE); Andreu, Kostakis, 12357 Berlin (DE)
(72) Erfinder: Bonneick, Heinz, 38226 Salzgitter (DE); Andreu, Kostakis, 12357 Berlin (DE)
(74) Vertreter: Bremer, Ulrich

(57) **Zusammenfassung**

Die Erfindung betrifft eine Werkzeugmaschine, mit mindestens
sich in Längsrichtung erstreckenden Seitenwandungen (3),
einem zwischen den Seitenwandungen ausgebildeten Bearbeitungsraum (13),
auf den Seitenwandungen (3) angeordneten Längsschienen (4),
einem auf den Längsschienen (4) verfahrbaren Transportschlitten (5),
einem auf Querschienen (6) des Transportschlittens (5) in Querrichtung verfahrbaren Bearbeitungsschlitten (7, 27), und
einer am Bearbeitungsschlitten (7) aufgenommenen Spindel (8).

Eine schnelle und sicher einstellbare Werkzeugmaschine wird mit geringen Kosten und geringem Aufwand geschaffen, indem auf den Querschienen (6) eine zweite Spindel (8) aufgenommen ist, und die beiden Spindeln (8) in Querrichtung relativ zueinander verfahrbar sind.

## Beschreibung

Die Erfindung betrifft eine Werkzeugmaschine zum Bearbeiten von Werkstücken in einem Bearbeitungsraum gemäß dem Oberbegriff von Anspruch 1.

Eine derartige Werkzeugmaschine nach der Gantry-Bauart ist z. B. aus der DE 199 16 977 A1 sowie der DE 201 10 420 U1 bekannt. Ein Transportschlitten mit Querschienen ist auf Längsschienen verfahrbar, wobei auf den Querschienen ein Bearbeitungsschlitten mit der in vertikaler Richtung verstellbaren Spindel angebracht ist, so dass drei Achsen gebildet werden, wobei auf einem Bearbeitungstisch eine oder zwei weitere Achsen ausgebildet sein können. Bei derartigen Pick-up-Systemen können Werkzeuge und/oder Werkstücke von der Spindel oder einem von der Spindel aufgenommenen Greifer von außerhalb des Bearbeitungsraums aufgenommen und in den Bearbeitungsraum verfahren werden.

Hierdurch wird eine hohe Vielseitigkeit der Werkzeugmaschine ermöglicht; allerdings ist ein erhöhter Zeitbedarf für die Aufnahme von Werkstücken und/oder Werkzeugen erforderlich.

Gemäß der DE 201 10 420 U1 sind Linearmotoren bzw. Direktantriebe zum Verstellen des Transportschlittens sowie des auf dem Transportschlitten geführten Bearbeitungsschlitten mit Spindel bekannt. Hierdurch entfallen aufwendigere Verstellungen über Kugelrollspindeln usw.

Allerdings ist der hierdurch gewonnene Vorteil begrenzt, da die Verstellung der erheblichen Massen durch die Direktantriebe oftmals nur relativ langsam ist. Weiterhin ist die Bearbeitungsgeschwindigkeit der Spindel begrenzt.

Um die Auswirkungen von Temperaturänderungen auf die Einstellwerte möglichst gering zu halten, sind die Bauteile in der Regel aus Stahl hergestellt. Dennoch ist eine numerische Kompensation der Einstellwerte der verschiedenen Achsen aufgrund der thermischen Ausdehnung der einzelnen Bauteile über eine entsprechende Steuereinrichtung erforderlich.

Der Erfindung liegt die Aufgabe zu Grunde, eine schnelle und sicher einstellbare, mit geringen Kosten und geringem Aufwand herstellbare Werkzeugmaschine zu schaffen.

Diese Aufgabe wird durch eine Werkzeugmaschine nach Anspruch 1 gelöst. Die Unteransprüche beschreiben bevorzugte Weiterbildungen.

Erfindungsgemäß ist somit mindestens eine zweite Spindel vorgesehen, die auf den gleichen Querschienen wie die erste Spindel verfahrbar ist. Hierbei kann auch der Abstand der Spindeln in Querrichtung zueinander verstellt werden. Grundsätzlich können auch mehr als zwei Spindeln vorgesehen sein.

Durch die beiden Spindeln kann eine deutlich höhere Bearbeitungsgeschwindigkeit erreicht werden als bei der herkömmlichen Verwendung lediglich einer Spindel. Da für die Querverstellung der beiden Spindeln die gleichen Spuleneinrichtungen des Direktantriebs verwendet werden, ist der zusätzliche apparative Aufwand relativ gering.

Die Spindeln können zum einen in zwei oder mehr getrennten Bearbeitungsschlitten aufgenommen sein, die separat auf den Querschienen über den dort angeordneten gemeinsamen Linearantrieb verstellt werden. Weiterhin können die beiden Spindeln auch auf einem gemeinsamen Bearbeitungsschlitten aufgenommen und relativ zueinander durch eine Feinjustiereinrichtung verstellt werden.

Es können z.B. zwei Bearbeitungsschlitten mit jeweils zwei Spindeln oder ein Bearbeitungsschlitten mit drei Spindeln vorgesehen sein. Grundsätzlich können bei allen Ausführungsformen in einem Spindelgehäuse mehr als eine Spindel vorgesehen sein, wobei die Spindeln in dem gemeinsamen Spindelgehäuse einen festen Abstand zueinander haben.

Gemäß einer bevorzugten Ausbildung ist eine Kühlung der Spindel vorgesehen. Anstelle der aufwändigen numerischen Kompensation der temperaturbedingten Längenänderungen wird somit die Temperatur im Betrieb möglichst konstant gehalten. Erfindungsgemäß wird hierdurch eine überraschend kostengünstige und mit geringem Aufwand herstellbare Lösung geschaffen, indem der Spindelkörper auf seiner Außenseite gekühlt wird. Dem liegt die Erkenntnis zu Grunde, dass die zu relevanten Längenänderungen führende Wärmeentwicklung von dem Spindelkörper ausgeht und dementsprechend durch eine geeignete Kompensation direkt an der wesentlichen Wärmequelle die aufwendige numerische Kompensationen der Einstellwerte entfallen kann.

Die Kühlung ergibt eine besonders vorteilhafte Kombination bei der zusätzlichen Verwendung von Linearantrieben bzw. Direktantrieben zur Verstellung des auf den Längsschienen geführten Transportschlittens und des auf den Querschienen des Transportschlittens geführten Bearbeitungsschlittens, da die Linearantriebe bzw. Direktantriebe keine nennenswerte Wärmeentwicklung aufweisen und somit keine nennenswerte und dauerhafte Erwärmung dieser Bauteile der Längs- und Querverstellung auftritt, so dass sämtliche Achsen ohne Kompensation angesteuert werden können.

Indem nun durch die erfindungsgemäße Kühlung auf der Außenseite des - vorzugsweise zylindrischen - Spindelkörpers eine gleichbleibende Temperatur erreicht wird, kann als Material für den Spindelkörper und vorteilhafterweise auch die weiteren zu verstellenden Elemente, d.h. insbesondere auch den Bearbeitungsschlitten, die Querschienen und den Transportschlitten, ein Leichtmetall gewählt werden, insbesondere Aluminium. Hierdurch ergibt sich eine weitere vorteilhafte Kombination mit einem hohen Synergieeffekt, da die Direktantriebe nur noch geringe Massen verstellen müssen, so dass eine sehr schnelle Verstellung möglich ist, bei der entsprechend auch eine zu vernachlässigende Wärmeentwicklung auftritt.

Die erfindungsgemäße Werkzeugmaschine ist somit überraschend einfach aufgebaut, erfordert keine numerische Kompensation der Einstellwerte und vermag auf Grund der schnellen und genauen Verstellbarkeit und Positionierbarkeit der Spindel eine schnelle Bearbeitung zu ermöglichen.

Die Kühleinrichtung kann insbesondere als schraubenförmiges Gewinde auf der Außenseite des Spindelkörpers ausgebildet sein. Eine Abdichtung des z. B. gefrästen schraubenförmigen Kühlkanals bzw. der mehreren Kühlkanäle nach außen kann insbesondere direkt durch die - vorzugsweise ebenfalls zylindrische - Innenfläche der umgebenden Spindelkörperaufnahme erfolgen.

Die erfindungsgemäßen Spindeln dienen insbesondere zur Aufnahme von Werkzeugen; es können jedoch auch - wie bei der eingangs genannten DE 199 16 977 A1 - Werkstücke von einer oder beiden Spindeln direkt oder mittels eines von der Spindel aufgenommenen Greifers von außerhalb des Bearbeitungsraums aufgenommen und in den Bearbeitungsraum verfahren werden; weiterhin können die Spindeln zum Fügen bzw. Montieren von Werkstücken dienen.

Erfindungsgemäß kann der Werkzeugwechsel des in der Spindel aufgenommenen Werkzeuges über einen oder zwei in Längsrichtung vor dem Bearbeitungsraum vorgesehene Werkzeugwechsler erfolgen. Vorteilhafterweise sind zwei Werkzeugwechsler in Querrichtung nebeneinander vorgesehen. Falls beide Spindeln auf beide Werkzeugwechsler wahlweise zugreifen können, ist somit eine hohe Anzahl von Werkzeugen für jede Spindel verfügbar. Falls einer der Werkzeugwechsler jeweils für beide Spindeln zugreifbar ist, können bei dem andere Magazin, von dem zu dem jeweiligen Zeitpunkt keine Werkzeuge entnommen werden, Werkzeuge von einer externen Zuführung oder manuell nachgefüllt werden. Dieses andere Magazin kann als Reservemagazin dienen und zum Wechseln der Werkzeuge des anderen Magazins vorgefahren werden, so dass keine oder nur geringe Stillstandszeiten zum Werkzeugwechsel auftreten.

Die Werkzeugwechsler können z.B. Kettenmagazine oder drehbare Rundtische sein, die sowohl einen horizontalen als auch einen vertikalen Werkzeugwechsel der Spindeln ermöglichen; ein Rundtisch kann hierbei insbesondere Taschen für die aufzunehmenden Werkzeuge aufweisen; weiterhin können auch Paletten, z.B. mit Lochaufnahmen für ein vertikales Ergreifen der Werkzeuge, vorgesehen sein. Die Werkzeugwechsler können grundsätzlich ortsfest vorgesehen sein, so dass die Spindeln in Längsrichtung zu ihnen verfahren werden; weiterhin können sie vorteilhafterweise auch in Längs- und/oder Querrichtung verstellbar sein und somit zu den Spindeln verfahren werden oder schnell zu einer Nachfüllung verstellt werden.

Alternativ zu der Verwendung von zwei Werkzeugwechslern kann auch ein einziger Werkzeugwechsler mit einem Kettenmagazin vorgesehen sein, das ein zu den Spindeln hin parallel, d.h. in Querrichtung verlaufendes Trum bzw. Band aufweist; hierzu kann die geschlossene Kette z.B. über drei oder auch mehr Rollen horizontal geführt werden.

Gemäß einer Ausführungsform ist eine Handhabungseinrichtung auf einer Längsschiene und einer zusätzlichen, sich direkt an die Längsschiene anschließenden Längsschienenverlängerung vorgesehen. Sowohl die Längsschiene bzw. die sie tragende Seitenwandung als auch die Längsschienenverlängerung sind mit Linearmotoren bestückt, so dass die Handhabungseinrichtung sowohl auf die Längsschienenverlängerung als auch auf die Längsschiene verfahrbar ist. Für die Verstellung der Handhabungseinrichtung auf die Längsschiene und somit für einen Zugang in den Bearbeitungsraum ist somit kein zusätzlicher Antrieb erforderlich, es können die ohnehin für die Längsverstellung des Transportschlittens vorgesehenen Linearantriebe verwendet werden.

Durch die Handhabungseinrichtung ist eine direkte Handhabung im Bearbeitungsraum möglich. Es können somit insbesondere auch Werkstücke z. B. durch Umspannen gewendet werden. Weiterhin kann ein Austausch von Werkstücken erfolgen, ohne dass hierzu die Spindel zur Aufnahme eines Greifers verstellt werden muss. Auch der Werkzeugwechsel ist vereinfacht, wobei neben einem vertikalen Werkzeugwechsel auch insbesondere ein horizontaler Werkzeugwechsel möglich ist.

Die Erfindung wird im Folgenden anhand der beiliegenden Zeichnungen an einigen Ausführungsformen näher erläutert. Es zeigen:

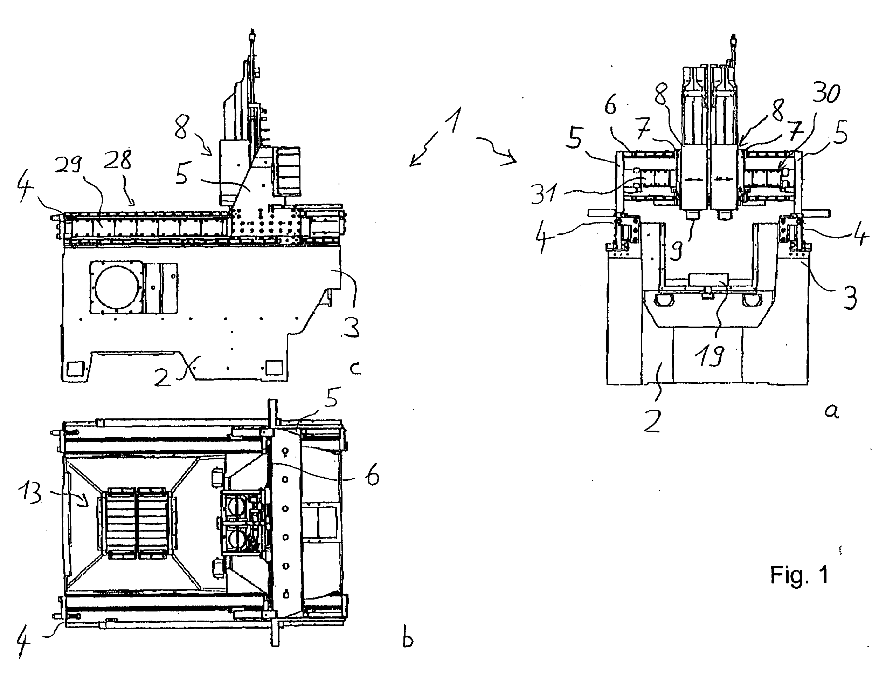

- Fig. 1a,b,c: eine Vorderansicht, Draufsicht und Seitenansicht einer erfindungsgemäßen Werkzeugmaschine;

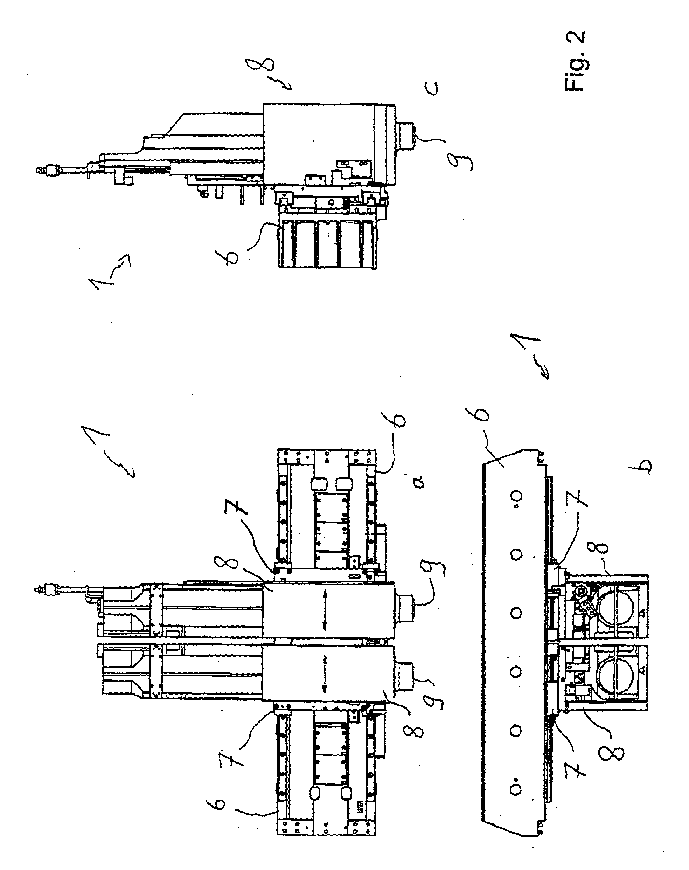

- Fig. 2a,b,c: Detailvergrößerungen des Transportschlittens mit Spindeln aus Fig. 1a, b, c;
- Fig. 3: eine gebrochene Ausschnittsvergrößerung eines Spindelkörpers aus Fig. 2a;
- Fig. 4: eine der Fig. 1c entsprechende Seitenansicht ohne Verkleidung der Werkzeugmaschine mit Werkstück- und Werkzeugaufnahme;
- Fig. 5: eine Draufsicht auf eine Werkzeugmaschine gemäß einer weiteren Ausführungsform;
- Fig. 6a,b: Seitenansichten der Werkzeugmaschine aus Fig. 5 von links (Richtung I) und rechts (Richtung II);
- Fig. 7a,b,c: eine Draufsicht, Vorderansicht und Seitenansicht eines Transportschlittens einer Werkzeugmaschine gemäß einer weiteren Ausführungsform;
- Fig. 8a,b,c: eine Draufsicht, Vorderansicht und Seitenansicht einer Werkzeugmaschine gemäß einer weiteren Ausführungsform;
- Fig. 9: eine Draufsicht auf einen Ausschnitt aus einer Werkzeugmaschine gemäß einer weiteren Ausführungsform mit den Spindeln und einem Werkzeugwechsler.

Eine Werkzeugmaschine 1 weist ein Maschinenbett 2, Seitenwandungen 3 und auf den Seitenwandungen 3 vorgesehene, in Längsrichtung verlaufende Längsschienen 4 auf. Bei der gezeigten Werkzeugmaschine 1 der Gantry-Bauart begrenzen die Seitenwandungen 3 den Bearbeitungsraum 13. Auf den Längsschienen 4 ist ein Transportschlitten 5 geführt, der Querschienen 6 aufweist, auf denen wiederum seitlich nebeneinander zwei Bearbeitungsschlitten 7 in Querrichtung verstellbar geführt ist.

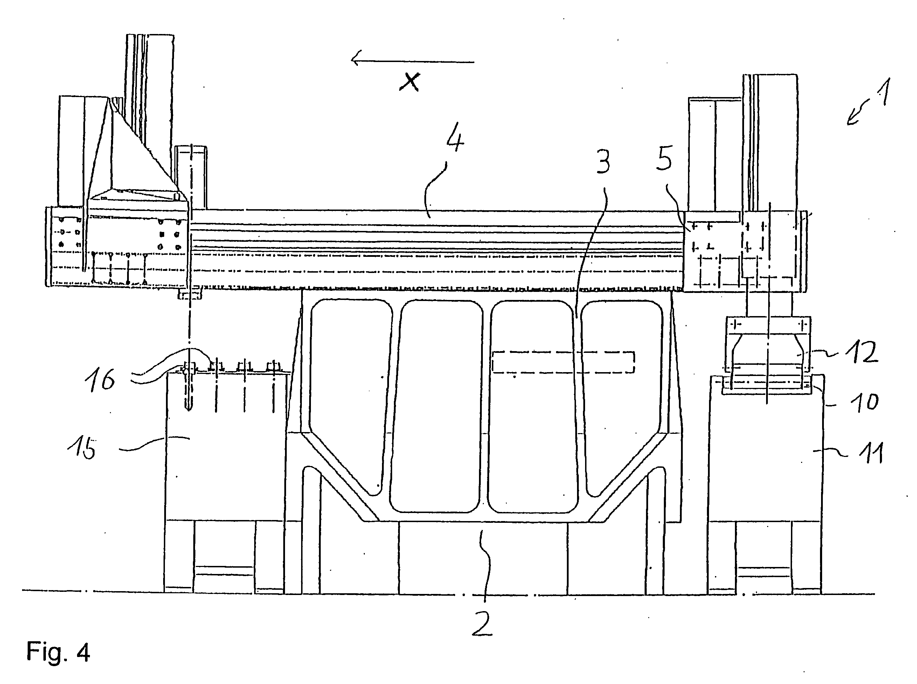

Auf den beiden Bearbeitungsschlitten 7 ist jeweils eine im Folgenden detaillierter beschriebene Spindel 8 mit Spindelstock 9 aufgenommen. Die Spindel 8 kann bei einer derartigen Pick-up-Werkzeugmaschine sowohl in den Bearbeitungsraum 13 als auch - wie in Figur 4 gezeigt - außerhalb des Bearbeitungsraumes 13, z. B. zur Aufnahme von Werkstücken 10 mittels eines Greifers 12 von einer Werkstückzuführung 11, z. B. einem Transportband oder einem Wagen, und weiterhin zu einer Werkzeugablage 15 zur Aufnahme von Werkzeugen 16 geführt werden.

Für die Längsführung des Transportschlittens 5 sind am oberen Ende der Seitenwandungen 3 bzw. an den Längsschienen 4 Linearantriebe 28 mit nebeneinander gesetzten Spuleneinrichtungen 29 vorgesehen, die an den beiden Seiten gleichmäßig angesteuert werden. Auch die Verstellung des Bearbeitungsschlittens 7 erfolgt über an oder zwischen den Querschienen 6 vorgesehene Linearantriebe 30 mit nebeneinander gesetzten Spuleneinrichtungen 31. Die Bearbeitungsschlitten 7, vorteilhafterweise auch der Transportschlitten 5 mit den Querschienen 6 sind hierbei ganz oder weitgehend aus Aluminium gefertigt.

Die Spindeln 8 können Werkstücke 10 von außerhalb in den Bearbeitungsraum 13 einführen und auf eine Werkstück- Aufnahmevorrichtung, z.B. einen Bearbeitungstisch 19 legen. Der Bearbeitungstisch 19 kann z.B. auf einer Werkstückhalteeinrichtung aufgenommen sein, die in den Seitenwandungen 3 schwenkbar gelagert ist, wodurch eine Drehachse zur Positionierung der Werkstücke gebildet wird. Weiterhin kann auch der Bearbeitungstisch 19 um seine Hochachse drehbar sein, so dass eine fünfachsige Bearbeitung - drei translatorische Achsen der Werkzeugverstellung und zwei rotatorische Achsen der Werkstückdrehung - möglich ist.

Nach Ablage des Werkstücks auf dem Bearbeitungstisch kann eine der Spindeln 8 nacheinander Werkzeuge 16 zur Bearbeitung der Werkstücke 10 aufnehmen. Weiterhin kann in der Spindel eine Werkzeugaufnahme aufgenommen sein sowohl für die Aufnahme von Werkzeugen als auch für die Aufnahme eines Greifers für z.B. Werkstücke oder Messgeräte.

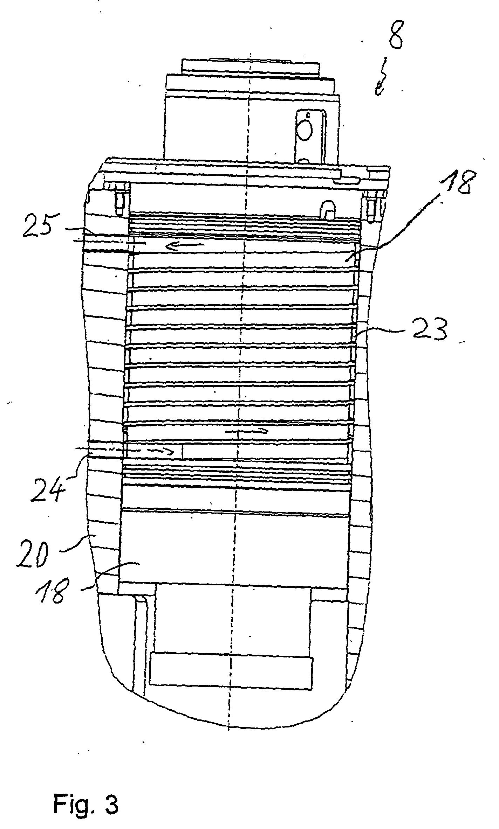

Der Aufbau einer der Spindeln 8 ist detaillierter in Figur 3 gezeigt. Die Spindel 8 weist einen Spindelkörper 18 auf, der in einer Spindelkörperaufnahme 20 mit einer zylindrischen Innenfläche 21 aufgenommen ist und den Spindelstock 9 in an sich bekannter Weise in seiner Höhe verstellt. Auf der Außenseite des Spindelkörpers 18 ist ein Gewinde 22 ausgebildet, das an der Innenfläche 21 der Spindelkörperaufnahme 20 anliegt und somit einen sich schraubenförmig entlang der Oberfläche des Spindelkörpers 18 erstreckenden Kühlkanal 23, oder grundsätzlich auch mehrere Kühlkanäle 23 ausbildet. Das Gewinde 22 ist vorteilhafterweise in die Außenseite des Spindelkörpers 18 eingefräst.

Am unteren Ende des Kühlkanals 23 führt ein Eingangsanschluss 24 als Schlauch oder Rohr in den Kühlkanal 23, und am oberen Ende des Kühlkanals 23 ist entsprechend ein Ausgangsanschluss 25 vorgesehen, der sich durch die Spindelkörperaufnahme 20 erstreckt. Die Anschlüsse 24, 25 können durch einfaches Hineinragen in den Kühlkanal 23 erfolgen.

Der Spindelkörper 18, die Spindelkörperaufnahme 20 und der Spindelstock 9 sind vorteilhafterweise aus Aluminium gefertigt. Entsprechend können auch der Transportschlitten 5 mit Querschienen 6 aus Aluminium gefertigt sein, so dass die für die dreiachsige Verstellung erforderlichen Massen sehr gering sind.

Der Eingangsanschluss 24 und der Ausgangsanschluss 25 sind in einen Kühlkreislauf eines Kühlmittels, z. B. Wasser, eingebunden, der sich über die Querschienen 6 erstreckende Schläuche, eine Pumpe sowie einen Temperaturmesser zur Messung der Temperatur des Spindelkörpers 18 sowie eine Regeleinrichtung umfasst, die in Abhängigkeit von der gemessenen Temperatur des Temperatursensors den Kühlmittelstrom durch den Kühlkanal 23 einstellt. Hierdurch wird eine im Wesentlichen konstante Temperatur unabhängig von der Leistungsabgabe des Spindelkörpers 18 geregelt, so dass von dem Spindelkörper 18 nach außen auf dem Bearbeitungsschlitten 7 und die Querschienen 6 keine Temperaturänderungen ausgegeben werden.

Die Ansteuerung der Spuleneinrichtungen der Linearantriebe 30 erfolgt ohne numerische Kompensation einer thermischen Ausdehnung, da der Spindelkörper 18 der Spindel 8 temperaturgeregelt ist und hierdurch keine Änderungen der Einstellwerte durch die thermische Ausdehnung zu berücksichtigen sind.

Für die beiden Spindeln 8 kann grundsätzlich ein gemeinsamer Kühlmittelkreislauf vorgesehen sein; grundsätzlich kann auch eine gemeinsame Regelung der Temperatur beider Spindeln bei Messung lediglich der Temperatur einer Spindel 8 vorgesehen sein.

Erfindungsgemäß sind die Bearbeitungsschlitten 7 unabhängig voneinander verstellbar, wobei sie sich gegenseitig jeweils zu einer Seite hin begrenzen.

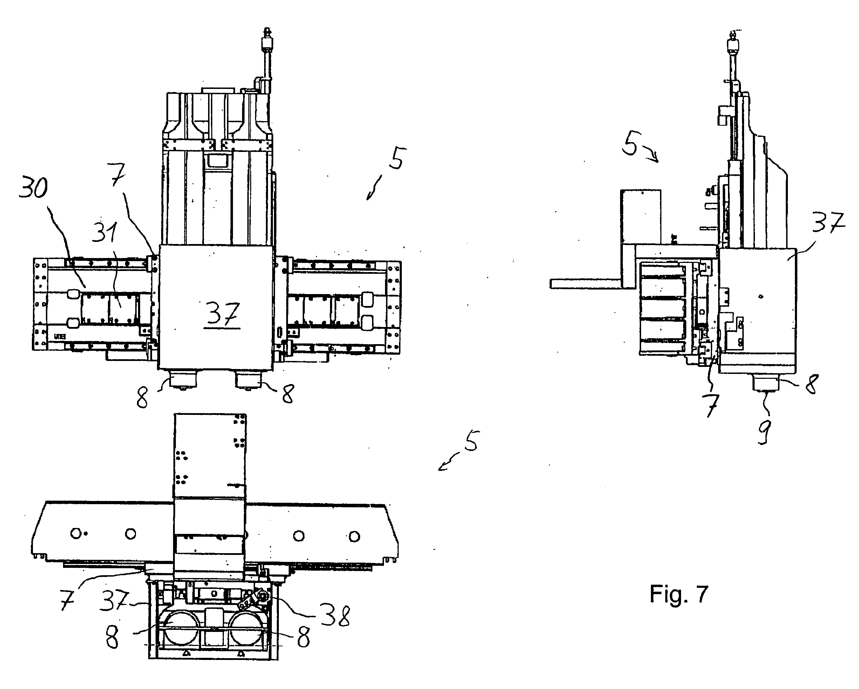

Bei der Ausführungsform der Fig. 7 sind die beiden Spindeln 8 nicht in zwei relativ zueinander verstellbaren Bearbeitungsschlitten 7, sondern in einem gemeinsamen Bearbeitungsschlitten 37 angeordnet und können über eine eventuell vorgesehene Feinjustiereinrichtung 38 in Querrichtung relativ zueinander verstellbar. Abweichend hiervon ist grundsätzlich auch die Aufnahme von zwei oder mehr Spindeln in einem gemeinsamen Spindelgehäuse möglich.

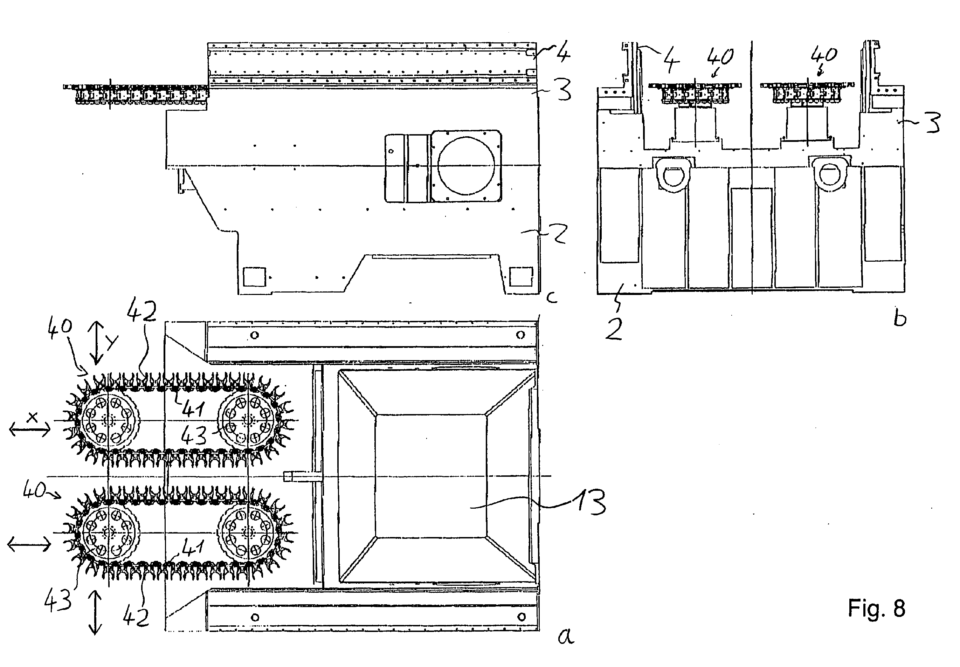

Gemäß der Ausführungsform der Fig. 8 a bis c können bei allen gezeigten Ausführungsformen ein oder zwei Werkzeugwechsler 40 vorgesehen sein, der/die voneinander unabhängig oder auch zusammen in Längs (x)- und in Quer (y)- Richtung verstellbar sind. Der Transportschlitten 5 mit Querschienen und Spindeln ist in diesen Figuren der Übersichtlichkeit halber weggelassen. Der eine/ die zwei Werkzeugwechsler ist/sind hierbei in einer üblichen Arbeitshöhe der Spindeln 8 angeordnet, so dass ein horizontaler Werkzeugwechsel der Spindeln 8 möglich ist. Der/die Werkzeugwechsler 40 können insbesondere als Kettenmagazine vorgesehen sein, der/die jeweils ein umlaufenden Förderband 41 mit Taschen 42 für die aufzunehmenden Werkzeuge aufweisen und jedes der aufgenommenen Werkzeuge wahlweise zur Verfügung stellen. Das Förderband 41 ist jeweils um zwei Trommeln 43 geführt. Alternativ zu dem/den Kettenmagazinen können auch ein oder zwei Rundtische mit Taschen 42 als Werkzeugwechsler vorgesehen sein.

Die Werkzeugwechsler können weiterhin auch stationär bzw. ortsfest angeordnet sein.

Jeder Spindel ist hierbei vorteilhafterweise ein Werkzeugwechsler 40 vorgesehen, d.h. der linken Spindel 8 der linke Werkzeugwechsler 40 und entsprechend rechts. Weiterhin kann jedoch jede Spindel bei Bedarf auch ein Werkzeug bei dem anderen Werkzeugwechsler aufnehmen, wozu sie entsprechend etwas weiter in Querrichtung zu verfahren ist. Grundsätzlich können auch beide Spindeln von dem gleichen Magazin Werkzeuge entnehmen.

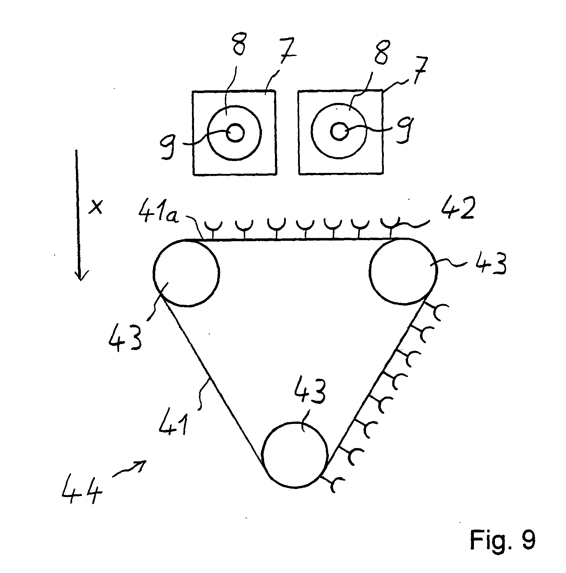

Bei der Ausführungsform der Fig. 9 ist vor den beiden Spindeln 8 ein Werkzeugwechsler 44 mit drei Trommeln 43 und umlaufendem Förderband 41 mit Taschen 42 vorgesehen. Der vordere Trum bzw. Bandabschnitt 41a liegt hierbei - zumindest im wesentlichen - parallel zu den beiden Spindeln, d.h. er verläuft in Querrichtung. Die Spindeln 8 können somit wahlweise auf mehrere der vorderen Taschen 42 zugreifen. Auch der Werkzeugwechsler 44 kann in Längs- und/oder Querrichtung verstellbar oder ortsfest sein.

Grundsätzlich können die Werkzeugwechsler 40, 44 bzw. Magazine in Längsrichtung zu den Spindeln verfahren werden. Alternativ hierzu können auch die Spindeln in Längsrichtung zu den Werkzeugwechslern verfahren werden, wobei in diesem Fall die Werkzeugwechsler 40,44 ortsfest sein können oder zum Nachfüllen der Werkzeuge seitlich oder nach hinten weggefahren werden können.

Die Taschen 42 können in der Horizontalebene schwenkbar sein. Hierdurch wird die lineare Beschickung der Spindeln verbessert. Es kann hierzu eine automatische Verschwenkung der Taschen 42 durch einen geeigneten Verstellmechanismus vorgesehen sein, der bei der Beschickung die Taschen 42 der Werkzeugwechsler 40 selbsttätig verschwenkt. Als Verstellmechanismus kann insbesondere ein Nockenmechanismus vorgesehen sein, der beim horizontalen Verfahren der Spindeln zu den Werkzeugwechslern 40 die Tasche bzw. deren Arm schwenkt. Alternativ hierzu kann auch ein Zwangsantrieb, eine Zwangsführung oder ein eigener Antrieb, z.B. mit einem hydraulischen Zylinder, für die Verstellung vorgesehen sein.

Grundsätzlich kann auch bei diesen Ausführungsform eine vertikale Werkzeugaufnahme durch die Spindeln 8 erfolgen.

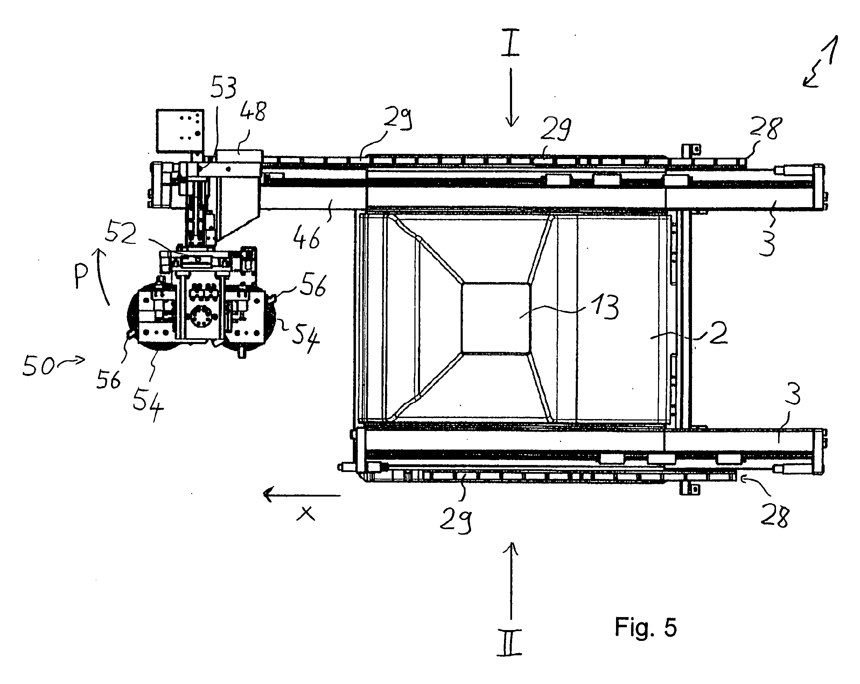

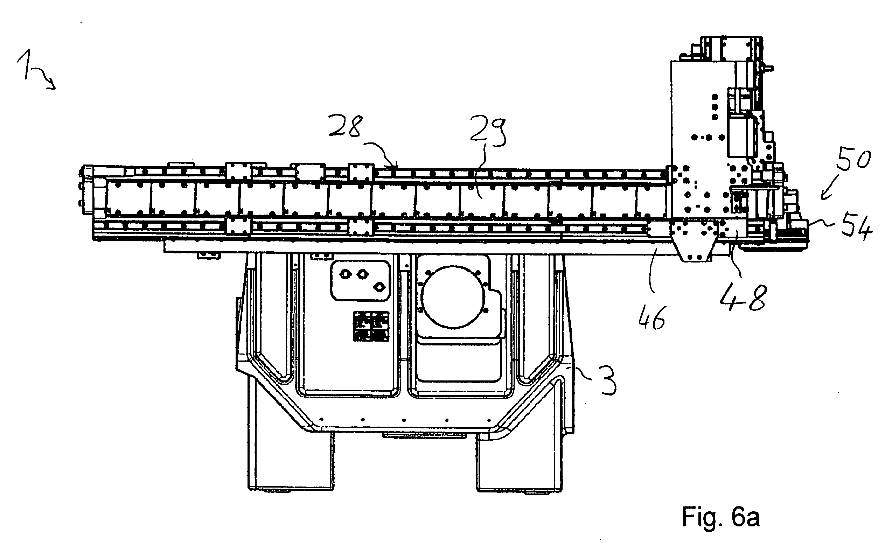

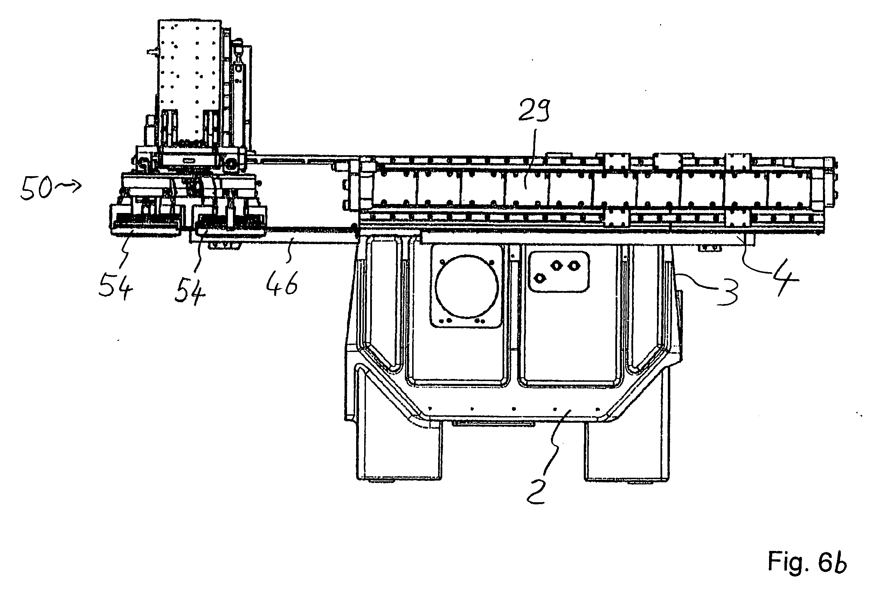

Alternativ zu Fig. 8a bis c kann auch die in Fig. 5 und 6a,b gezeigte Ausbildung bei allen vorher beschriebenen Ausführungsformen vorgesehen sein. Gemäß dieser Ausbildung ist die linke Längsschiene 4 nach vorne über die Seitenwandung 3 hinaus gegenüber der rechten Längsschiene 4 um eine Längsschienenverlängerung 46 verlängert. Hierbei sind die Spuleneinrichtungen 29 durchgängig auf der linken Längsschiene 4 und auf der Längsschienenverlängerung 46 vorgesehen, grundsätzlich ist entsprechend auch eine Anbringung auf der rechten Seite möglich.

Auf der Längsschienenverlängerung 46 ist ein Handhabungsschlitten 48 mit einer Handhabungseinrichtung 50 aufgenommen, die in Längsrichtung auch entlang der linken Längsschiene 4 verfahrbar ist. Die Handhabungseinrichtung 50 ist über ein Schwenkgelenk 52 an dem Handhabungsschlitten 48 befestigt und kann gemäß Pfeil P in x-Richtung bzw. Längsrichtung nach vorne zu einer Werkzeugzuführung und/oder Werkstückzuführung geschwenkt werden. Die Handhabungseinrichtung 50 weist zwei Handhabungstrommeln 54 mit Taschen 56 auf, in denen wahlweise Werkstücke und/oder Werkzeuge aufgenommen werden können. Von den beiden Handhabungstrommeln 54 entnimmt eine Trommel Werkstücke aus der Werkstück-Aufnahmevorrichtung und beschickt die andere Trommel die Werkstück-Aufnahmevorrichtung mit neuen Werkstücken. Anstelle der Taschen 56 können auch Greifer vorgesehen sein, die aktiv Werkstücke und/oder Werkzeuge greifen können.

Weiterhin ist ein zusätzliches Gelenk 53 der Handhabungseinrichtung 50 im Bereich der Längsschienenverlängerung 46 vorgesehen, um das die Handhabungseinrichtung 50 verschwenkt werden kann zur Freigabe des Bearbeitungsraums für Reparaturen und Wartungen sowie zum Zuführen größerer Anordnungen. Hierdurch kann vorteilhafterweise die gesamte Vorderseite des Bearbeitungsraums freigegeben werden.

Die Handhabungseinrichtung 50 kann erfindungsgemäß wahlweise eingesetzt werden zum:
Be- und Entladen von Werkstücken oder Paletten oder Vorrichtungen mit Werkstücken,
Werkzeugwechseln,
Montieren des im Bearbeitungsraum 13 bearbeiteten Werkstückes, z.B. zum Einschrauben eines Lagerdeckels,
Fügen,
Wenden, z.B. zur Änderung der Positionierung des Werkstücks im Bearbeitungsraum 13, insbesondere zum Umspannen des Werkstücks,
Messen, z.B. durch Aufnahme einer entsprechenden Messeinrichtung, z.B. einer Lehre zur Messung von Abständen des Werkstückes zwischen verschiedenen Bearbeitungsschritten.

Die Handhabungseinrichtung kann mit Werkzeugen und/oder Werkstücken direkt von außen nachgefüllt werden, wozu vorteilhafterweise zwei Handhabungstrommeln vorgesehen sind, von denen eine Trommel Werkstücke aus der Werkstück-Aufnahmevorrichtung entnimmt und die andere Trommel die Werkstück- Aufnahmevorrichtung mit neuen Werkstücken beschickt.

## Patentansprüche

1. Werkzeugmaschine, mit mindestens
sich in Längsrichtung erstreckenden Seitenwandungen (3), einem zwischen den Seitenwandungen ausgebildeten Bearbeitungsraum (13),
auf den Seitenwandungen (3) angeordneten Längsschienen (4),
einem auf den Längsschienen (4) verfahrbaren Transportschlitten (5),
einem auf Querschienen (6) des Transportschlittens (5) in Querrichtung verfahrbaren Bearbeitungsschlitten (7, 27),
einer am Bearbeitungsschlitten (7, 37) aufgenommenen Spindel (8) zur Aufnahme mindestens eines Werkzeuges,
in den Seitenwandungen (3) und/oder den Längsschienen (4) angeordneten Linearmotoren (28) mit Spuleneinrichtungen (29) für die Längsverstellung des Transportschlittens (5),
in dem Transportschlitten (5) in Querrichtung verteilt angeordneten Linearmotoren (30) mit Spuleneinrichtungen (31) für die Querverstellung des Bearbeitungsschlittens (7, 37)
**dadurch gekennzeichnet, dass**
auf den Querschienen (6) mindestens eine zweite Spindel (8) verfahrbar aufgenommen ist,
die beiden Spindeln (8) über dieselben Spuleneinrichtungen verfahrbar sind, und
die beiden Spindeln (8) in Querrichtung relativ zueinander verfahrbar sind.

2. Werkzeugmaschine nach Anspruch 1, **dadurch gekennzeichnet, dass** die Spindeln (8) in zwei auf den Querschienen (6) aufgenommenen Bearbeitungsschlitten (7) aufgenommen sind, die relativ zueinander verstellbar sind.

3. Werkzeugmaschine nach Anspruch 1 oder 2, **dadurch gekennzeichnet, dass** die Linearmotoren (30) für die Querverstellung des einen Bearbeitungsschlittens (37) oder der beiden Bearbeitungsschlitten (7) an oder parallel zu den Querschienen (6) vorgesehen sind.

4. Werkzeugmaschine nach einem der vorherigen Ansprüche, **dadurch gekennzeichnet, dass** an der Außenseite des mindestens einen Spindelkörpers (18) der Spindeln (8) eine Kühleinrichtung (23) vorgesehen ist.

5. Werkzeugmaschine nach Anspruch 4, **dadurch gekennzeichnet, dass** die Kühleinrichtung (23) ein schraubenförmiger Kühlkanal (23) mit mindestens zwei Kühlmittelanschlüssen (24, 25) ist.

6. Werkzeugmaschine nach Anspruch 5, **dadurch gekennzeichnet, dass** der Kühlkanal (23) zwischen einem auf der Außenseite des mindestens einen Spindelkörpers (18) ausgebildeten Gewinde (22) und einer den mindestens einen Spindelkörper (18) umgebenden Spindelkörperaufnahme (20) ausgebildet ist.

7. Werkzeugmaschine nach einem der Ansprüche 4 bis 6, **dadurch gekennzeichnet, dass** in oder an dem mindestens einen Spindelkörper (18) ein Temperatursensor vorgesehen ist, und eine Regeleinrichtung zur Regelung eines durch den mindestens einen Kühlkanal (23) verlaufenden Kühlkreislaufs in Abhängigkeit von der von dem Temperatursensor ermittelten Temperatur des Spindelkörpers (18) vorgesehen ist.

8. Werkzeugmaschine nach einem der vorherigen Ansprüche, **dadurch gekennzeichnet, dass**
eine der beiden Längsschienen (4) um eine über den Bearbeitungsraum (13) hinaus gehende Längsschienenverlängerung (46) verlängert ist,
auf der Längsschienenverlängerung (46) Spuleneinrichtungen (29) vorgesehen sind,
ein Handhabungsschlitten (48) mit einer Handhabungseinrichtung (50) auf der Längsschienenverlängerung (46) aufgenommen und durch die Spuleneinrichtungen (29) in Längsrichtung auf der Längsschiene (4) und der Längsschienenverlängerung (46) verfahrbar ist, und
durch die Handhabungseinrichtung (50) Werkstücke in der Werkstück- Aufnahmevorrichtung (19) austauschbar sind.

9. Werkzeugmaschine nach Anspruch 8, **dadurch gekennzeichnet, dass** von der Handhabungseinrichtung (50) wahlweise Werkstücke, Paletten mit Werkstücken oder Aufnahmevorrichtungen mit Werkstücken in den Bearbeitungsraum einführbar sind.

10. Werkzeugmaschine nach Anspruch 8 oder 9, **dadurch gekennzeichnet, dass** durch die Handhabungseinrichtung (50) im Bearbeitungsraum (13) Werkstücke montierbar, z.B. einschraubbar, sind.

11. Werkzeugmaschine nach einem der Ansprüche 8 bis 10, **dadurch gekennzeichnet, dass** durch die Handhabungseinrichtung (50) das in der Spindel aufgenommenen Werkzeug wechselbar ist.

12. Werkzeugmaschine nach einem der Ansprüche 8 bis 11, **dadurch gekennzeichnet, dass** die Handhabungseinrichtung (50) horizontal schwenkbare Taschen (56) zur horizontalen Beschickung der Spindel (8) aufweist.

13. Werkzeugmaschine nach einem der Ansprüche 8 bis 12, **dadurch gekennzeichnet, dass** von der Spindel Werkzeuge auch vertikal aus den Taschen (56) entnehmbar sind.

14. Werkzeugmaschine nach einem der Ansprüche 8 bis 13, **dadurch gekennzeichnet, dass** durch die Handhabungseinrichtung (50) im Bearbeitungsraum (13) Werkstücke durch Fügen bearbeitbar sind.

15. Werkzeugmaschine nach einem der Ansprüche 8 bis 14, **dadurch gekennzeichnet, dass** durch die Handhabungseinrichtung (50) im Bearbeitungsraum (13) Werkstücke wendbar sind, z.B. durch Umspannen.

16. Werkzeugmaschine nach einem der Ansprüche 8 bis 15, **dadurch gekennzeichnet, dass** durch die Handhabungseinrichtung (50) im Bearbeitungsraum (13) Werkstücke vermessbar sind.

17. Werkzeugmaschine nach einem der Ansprüche 8 bis 16, **dadurch gekennzeichnet, dass** die Handhabungseinrichtung (50) mindestens eine Handhabungstrommel (54) zum Aufnehmen und Austauschen von Werkzeugen und/oder Werkstücken aufweist.

18. Werkzeugmaschine nach Anspruch 17, **dadurch gekennzeichnet, dass** die Handhabungseinrichtung (50) mindestens zwei Handhabungstrommeln (54) aufweist, von denen eine Werkstücke aus der Werkstück-Aufnahmevorrichtung (19) entnimmt und die andere Werkstücke der Werkstück-Aufnahmevorrichtung (19) zuführt.

19. Werkzeugmaschine nach einem der Ansprüche 8 bis 16, **dadurch gekennzeichnet, dass** die Handhabungseinrichtung (50) Greifer zum aktiven Greifen von Werkzeugen und/oder Werkstücken aufweist.

20. Werkzeugmaschine nach einem der Ansprüche 8 bis 19, **dadurch gekennzeichnet, dass** die Handhabungseinrichtung (50) am Handhabungsschlitten (48) horizontal zu einer Werkstücknachfüllung und/oder Werkzeugnachfüllung schwenkbar ist.

21. Werkzeugmaschine nach einem der vorherigen Ansprüche, **dadurch gekennzeichnet, dass** mindestens ein Werkzeugwechsler (40,44) vor dem Bearbeitungsraum (13) vorgesehen ist, durch den ein horizontaler und/oder ein vertikaler Werkzeugwechsel der beiden Spindeln möglich ist.

22. Werkzeugmaschine nach Anspruch 21, **dadurch gekennzeichnet, dass** zwei Werkzeugwechsler (40) vor dem Bearbeitungsraum (13) in Querrichtung nebeneinander vorgesehen sind, durch die ein horizontaler und/oder ein vertikaler Werkzeugwechsel der beiden Spindeln möglich ist.

23. Werkzeugmaschine nach Anspruch 21 oder 22, **dadurch gekennzeichnet, dass** der oder die Werkzeugwechsler (40, 44) in Längs (x)- und/oder in Quer (y)- Richtung verstellbar ist/sind.

24. Werkzeugmaschine nach Anspruch 21, **dadurch gekennzeichnet, dass**
der oder die Werkzeugwechsler (40, 44) ortsfest vor dem Bearbeitungsraum (13) vorgesehen ist/ sind,
die Spindeln bis zu dem mindestens einen ortsfesten Werkzeugwechsler (40, 44) verfahrbar sind, und
durch den mindestens einen Werkzeugwechsler ein horizontaler und/oder ein vertikaler Werkzeugwechsel der beiden Spindeln möglich ist.

25. Werkzeugmaschine nach einem der Ansprüche 21 bis 24, **dadurch gekennzeichnet, dass** der eine Werkzeugwechsler (44) oder die Werkzeugwechsler (40) Kettenmagazine ist/sind, der/die jeweils ein umlaufendes Förderband (41) mit Taschen (42) für die aufzunehmenden Werkzeuge aufweist/aufweisen.

26. Werkzeugmaschine nach Anspruch 25, **dadurch gekennzeichnet, dass** ein Werkzeugwechsler (44) vorgesehen ist und das Förderband (41) einen Bandabschnitt (41a) aufweist, das in Querrichtung (Y) vor den Spindeln (8) verläuft.
